(19) **Europäisches Patentamt**

**European Patent Office**

**Office européen des brevets**

(11) Veröffentlichungsnummer: **0 164 098**
A2

## (12) EUROPÄISCHE PATENTANMELDUNG

(21) Anmeldenummer: 85106882.5

(22) Anmeldetag: 04.06.85

(51) Int. Cl.⁴: **F 28 F 3/08**, F 24 H 1/28, F 23 J 15/00, B 01 D 53/36, B 01 D 53/34

(30) Priorität: **06.06.84 DE 8417172 U**

(43) Veröffentlichungstag der Anmeldung: **11.12.85 Patentblatt 85/50**

(84) Benannte Vertragsstaaten: **AT BE CH DE FR GB IT LI LU NL SE**

(71) Anmelder: **Ufer, Willy, Berghofstrasse 1, D-5900 Siegen 21 (DE)**

(72) Erfinder: **Ufer, Willy, Berghofstrasse 1, D-5900 Siegen 21 (DE)**

(74) Vertreter: **Grosse, Dietrich, Dipl.-Ing. et al, Patentanwälte F.W. Hemmerich, Gerd Müller, Dipl.-Ing. D. Grosse, Felix Pollmeier Hammerstrasse 2, D-5900 Siegen 1 (DE)**

(54) **Wärmetauscher.**

㊗ Die Erfindung bezieht sich auf einen Wärmetauscher zur Übertragung von Wärmeenergie zwischen einem gasförmigen und einem flüssigen Medium mit einer Anzahl von vom flüssigen Medium vorzugsweise parallel durchflossenen Rippen, deren Zwischenräume vom gasförmigen Medium durchsetzt werden. Derartige Wärmetauscher finden verbreitet Verwendung, können aber auch Teil eines durch Ölbrenner beheizten Heizkessels für Zentralheizungen sein.

Zur weitgehenden Wärmeausnutzung und zum weitgehenden Temperaturangleich sind, der relativ geringen Wärmeübergangszahl wegen, dem gasförmigen Medium ausgedehnte, von ihm bestrichene Heizflächen erforderlich. Um mit geringem Aufwande und niedrigem Platzbedarf hohe Heizflächen zur Verfügung stellen zu können wird vorgeschlagen, die Rippen 34 mit planen, einander parallelen Wandungen auszustatten, zwischen denen Streckmetallplatten 42 bis 46 bzw. mehrere Lagen solcher Streckmetallplatten vorgesehen sind, die in festem Kontakte mit den Wandungen der Rippen stehen. Damit werden mit geringen Kosten vom gasförmigen Medium umflossene grosse Oberflächenbereiche erzielt, die auch eine erwünschte Durchwirbelung des gasförmigen Mediums und damit eine Erhöhung der Übergangszahl bewirken, wenn die Stege des Streckmetalls in Strömungsrichtung des gasförmigen Mediums gegen die Wandungen der Rippen gerichtet sind.

- 1 -

## Wärmetauscher

Die Erfindung betrifft einen Wärmetauscher zur Übertragung von Wärmeenergie insbesondere zwischen einem flüssigen und einem gasförmigen Medium mit einer Anzahl von vom flüssigen Medium vorzugsweise parallel durchflossenen, vom gasförmigen Medium durchsetzte Zwischenräume aufweisenden Rippen.

Derartige Wärmetauscher werden vielfach zur Gewinnung von Wärme bzw. der Restwärme eingesetzt. Insbesondere bei der Wärmeübertragung aus oder in gasförmige Medien werden hierbei, um den Wärmeübergang zu verbessern, die mit dem gasförmigen Medium in Verbindung stehenden Oberflächen vergrößert; so werden z.B. verbreitet Spiral-Rippenrohre eingesetzt, deren äußere Mantelfläche durch schraubenlinienartig abgewickelte Rippen vergrößert ist.

Es wurde jedoch erkannt, daß zur Erzielung eines guten Wärmeumsatzes nicht nur Oberflächen zu vergrößern sind, die Wärmeübertragung wird durch Erhöhung der Strömungsgeschwindigkeit verbessert, und diese läßt sich ohne wesentliche Verkürzung der Verweilzeit durch Verwirbelung steigern, die gleichzeitig den Vorteil guter Durchmischung bietet.

Die Erfindung geht daher von der Aufgabe aus, einen Wärmetauscher zu erstellen, der leicht und einfach und damit mit geringen Kosten erstellbar ist, und der durch günstige Wärmeübergangs-Bedingungen bei kompaktem Aufbau eine weitgehende Angleichung der Temperaturen der über eine Trennwand einander

- 2 -

gegenüberstehende Medien ermöglicht.

Gelöst wird diese Aufgabe, indem die Rippen eines gattungsgemäß ausgebildeten Wärmetauschers einander parallele Wandungen aufweisen, und indem zwischen den Wandungen in festem Kontakte mit diesen stehende Streckmetallplatten vorgesehen sind, wobei die Stege des Streckmetalles in Strömungsrichtung des gasförmigen Mediums gegen die Wandungen der Rippen gerichtet sind. Durch diese Ausbildung werden nicht nur die Rippen des Streckmetalles vom gasförmigen Medium direkt umspült, so daß sich großflächige Berührungen ergeben und die aufgenommene Wärme in direktem metallischem Kontakte auf die Wandungen der Rippen übertragen werden kann: Der Strom des Mediums wird fein aufgeteilt, gegen die Wandungen der Rippen gerichtet und hierbei verwirbelt, so daß lokal die Durchsatzgeschwindigkeit wesentlich übersteigende Geschwindigkeiten des Mediums erreicht werden und auch hierdurch der Wärmeübergang gegenüber üblichen Konstruktionen verbessert wird.

Hierbei hat es sich bewährt, die Streckmetallplatten jeweils aus mehreren, zweckmäßig in gerader Anzahl, aufeinander gelegten und miteinander verschweißten Streckmetallblechen zu erstellen. Hierdurch lassen sich relativ feinmaschige Streckmetallplatten auch größerer Stärke erstellen, und wenn die Streckmetallbleche bezüglich der Ausrichtung ihrer Stege symmetrisch angeordnet sind ist es auch möglich, das Medium jeweils von der Mitte her auf zwei einander gegenüberstehende Wandungen von Rippen zu richten. Für die Übertragung größerer Wärmemengen bzw. die Angleichung über einen größeren Temperaturbereich hat es sich bewährt, in Strömungsrichtung hintereinander Streckmetallplatten mit unterschiedlichen, mit der Abkühlung des gasförmigen Mediums stufenweise abnehmenden Maschenweiten vorzusehen. Es ist aber auch möglich, eine Anzahl von Wärmetauschern in Serie zu betreiben, insbesondere wenn beispielsweise Rauchgasen die Wärme entzogen werden soll und in unterschiedlichen Abschnitten die Wärme auf unterschiedliche

- 3 -

Medien übertragen werden soll, beispielsweise innerhalb eines Dampferzeugers auf zu verdampfendes Wasser, in einem weiteren Abschnitt Heizungs- oder Brauchwasser erhitzt werden soll, und schließlich in nachgeordneten Abschnitten eine Aufheizung der für einen Brenner, eine Feuerung oder dergleichen bestimmten Zuluft erfolgen soll.

Bewährt hat es sich, in Strömungsrichtung gesehen, die Streckmetallplatten mindestens der ersten Zonen der Zwischenräume aus hochtemperaturbeständigen Metallen bzw. Metalllegierungen bestehen zu lassen. Hierbei ist es möglich, an Stelle von Streckmetallblechen oder ggf. zusätzlich zu diesen gelappte Bleche mit vorzugsweise dreiseitig ausgestanzten, schräg ausgebogenen Lappen vorzusehen.

Die Rippen bestehen zweckmäßig aus miteinander verschweißten Halbschalen, die aus Blech gepreßt oder auch gegossen sein und durch sie durchziegende Distanzbolzen ausgesteift sein können. Weitere Merkmale der Erfindung sind den Unteransprüchen zu entnehmen.

Im einzelnen sind die Merkmale der Erfindung anhand der folgenden Beschreibung von Ausführungsbeispielen erläutert. Es zeigen hierbei:

Fig. 1 einen Wärmetauscher mit zwischen Rippen vorgesehenen Streckmetallplatten,

Fig. 2 einen Horizontalschnitt durch einen vertikal gestellten Wärmetauscher, der für die Übertragung von Wärme aus einem Gas in ein anderes bestimmt ist,

Fig. 3 einen Vertikalschnitt durch den Wärmetauscher nach Fig.2,

Fig. 4 einen Schnitt durch einen Wärmetauscher, dessen durch Bolzen versteifte Rippen kammartig miteinander verbunden sind,

Fign.5 ein Streckmetallblech, zu einer Streckmetallplatte verbundene Streckmetallbleche und innerhalb benachbarter Rippen vorgesehene Streckmetallplatten,

- 4 -

Fig. 6 geschnitten einen mit dem Wärmetauscher ausgestatteten Heizkessel,

Fig. 7 einen hierzu senkrecht geführten Schnitt durch einen variierten Heizkessel, und

Fign.8 Schnitte durch weitere, Wärmetauscher enthaltende, mit festen bzw. flüssigen Brennstoffen befeuerbare Heizkessel.

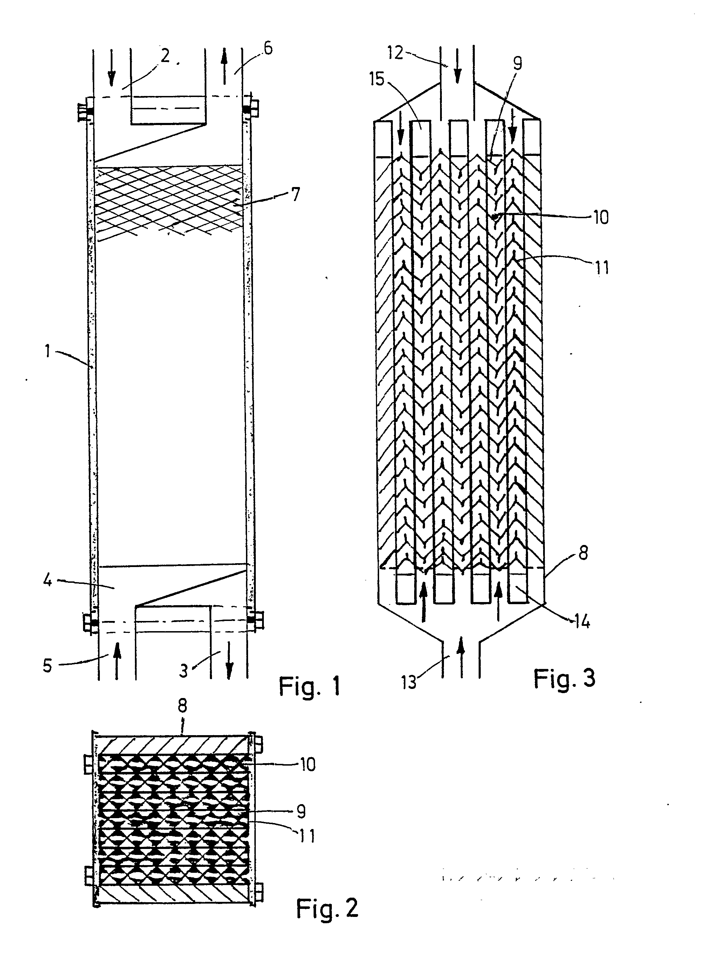

Ein einfacher Wärmetauscher ist in einer den Rippen parallelen vertikalen Ebene geschnitten in Fig. 1 gezeigt. In einem Gehäuse 1, das mit einer Zuführung 2 und mit einer Abführung 3 für ein vorzugsweise gasförmiges Medium versehen ist, sind einander parallele Rippen 4 angeordnet, die mit einem vorzugsweise flüssigen Medium im Gegenstrom über eine Zuführung 5 gespeist werden, und die jeweils mit einer Abführung 6 ausgestattet sind. Die Rippen können hierbei schon im Wärmetauscher gemeinsam mit der Zuführung 5 und der Abführung 6 verbunden sein, es ist aber auch möglich, den Rippen jeweils individuelle Zu- und Abführungen zuzuordnen und diese außerhalb des Wärmetauschers miteinander zu verbinden. Zwischen den vorzugsweise gegeneinander verspannten Rippen sind Streckmetallplatten 7 vorgesehen, die sich unter Vorspannung auf die Wandungen der Rippen legen.

Werden beispielsweise Rauchgase der Zuführung 2 aufgegeben, so durchströmen sie den Wärmetauscher in zwischen den Rippen 4 verbliebenen Freiräumen. In diesen Freiräumen sind aber auch die Streckmetallplatten 7 vorgesehen, so daß das durchziehende Rauchgas diese Streckmetallplatten umspült und großflächigen Kontakt mit ihnen erhält. Gleichzeitig sind aber auch die Streckmetallplatten derart aus aufeinander gelegten Streckmetallblechen erstellt, daß die Vorzugsrichtung der Stege des Streckmetalls das durchströmende Gas jeweils nach außen gegen die Wandungen der Rippen richtet. Damit wird zunächst einmal die Strömungsgeschwindigkeit des gasförmigen Mediums im Bereiche des Streckmetalls erhöht, durch die Streckmetallplatten wird dem gasförmigen Medium eine wesentlich erhöhte metallene Kontaktfläche geboten, wobei die übernommene Wärme in direktem

- 5 -

metallischen Kontakt auf die Rippenwandungen überleitet wird, und schließlich wird durch die Art der Ausrichtung der Stege des Streckmetalls die Strömung jeweils direkt gegen die Rippenwandungen geleitet. Damit wird bei relativ kompaktem und kostengünstigem Aufbau eine hohe Wärmeübertragung gesichert.

Die Erfindung ist jedoch nicht nur auf das Anordnen von Streckmetall zwischen Rippen beschränkt; insbesondere wenn beide den Wärmeübertrager durchsetzende Medien gasförmig sind, hat es sich bewährt, auch das Innere der Rippen mit Streckmetall auszustatten. Ein Horizontalschnitt durch einen derartigen Wärmeübertrager ist in Fig. 2 dargestellt: Im Gehäuse 8 sind Rippen 9 angeordnet, und in diesen Rippen 9 befinden sich ebenso Streckmetallplatten 10, wie zwischen den Rippen Streckmetallplatten 11. Wie der Vertikalschnitt der Fig. 3 zeigt, ist der Wärmeübertrager mit einer Zuführung 12 und einer gleichachsig angeordneten Zuführung 13 für das zweite Medium ausgestattet. Die Rippen 9, die über die Zuführung 13 gespeist werden, enthalten in ihrem oberen Teil rechtwinklig nach außen führende Abführungen 15, während im unteren Bereiche des Wärmetauschers zwischen den Rippen Abführungen 14 für das über die Zuführung 12 eingegebene Medium vorgesehen sind. Auch hier ergibt sich eine großflächige Berührung nicht nur der Wandungen der Rippen 9, sondern auch der jeweiligen, durch die Streckmetallplatten 11 gebotenen Oberflächenbereiche, welche die ihnen vermittelte Wärme in metallischem Kontakt auf die Wandungen der Rippen überführen. Weiterhin werden durch die Volumen verdrängenden Streckmetallplatten höhere Strömungsgeschwindigkeiten erreicht, die durch gebildete Wirbel weiterhin verstärkt werden, nicht unerhebliche Teile der Medien werden direkt gegen die Rippen gerichtet, und weiterhin findet eine kräftige Durchmischung der Medienströme statt, so daß die einzelnen Volumenbereiche der Medien periodisch nacheinander stets direkt gegen Rippenwände geführt werden.

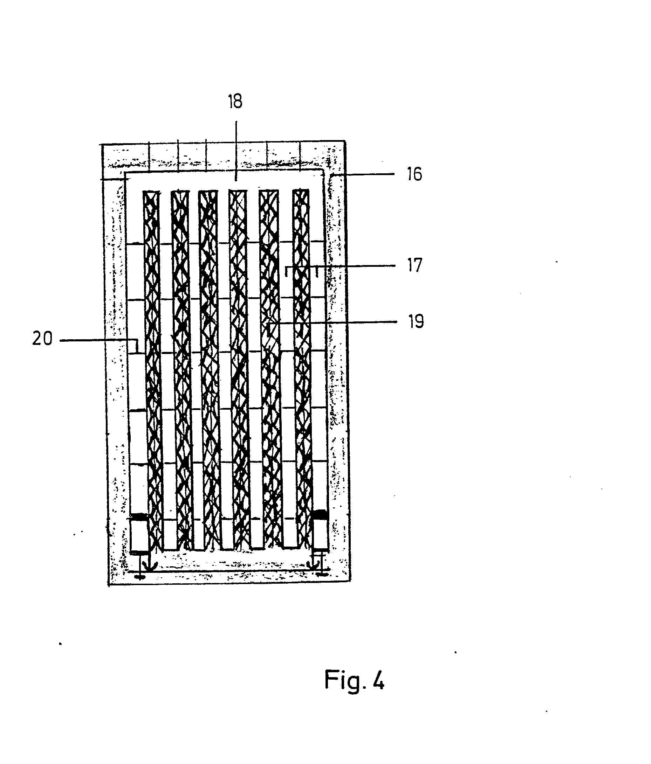

Ähnlich aufgebaut ist auch ein weiterer, in Fig. 4 gezeigter Wärmetauscher: Um Wärmeverluste zu vermeiden, wird ein doppel-

- 6 -

wandiges, mit thermischem Isoliermaterial gefülltes Gehäuse 16 verwendet, in dem Rippen 17 gehalten sind, die einendig in einen gemeinsamen Behälterbereich 18 übergehen, der seinerseits die in der Figur nicht dargestellte Zu- sowie die Abführung aufweist. Zwischen den Rippen sind Streckmetallplatten 19 vorgesehen, die aus mehreren, miteinander verbundenen Streckmetallblechen bestehen, die symmetrisch so angeordnet sind, daß jeweils die äußeren Stege in Strömungsrichtung nach außen weisen. Durch nicht dargestellte Mittel werden die Rippen 17 gegeneinander und gegen die Streckmetallplatten 19 verspannt. Ausgesteift werden sie hierbei durch quer in ihnen angeordnete Bolzen 20, die gleichzeitig die dem zweiten, die Rippen durchströmenden Medium eine größere Oberfläche bieten, die in metallischem Kontakt mit den Rippenwandungen steht.

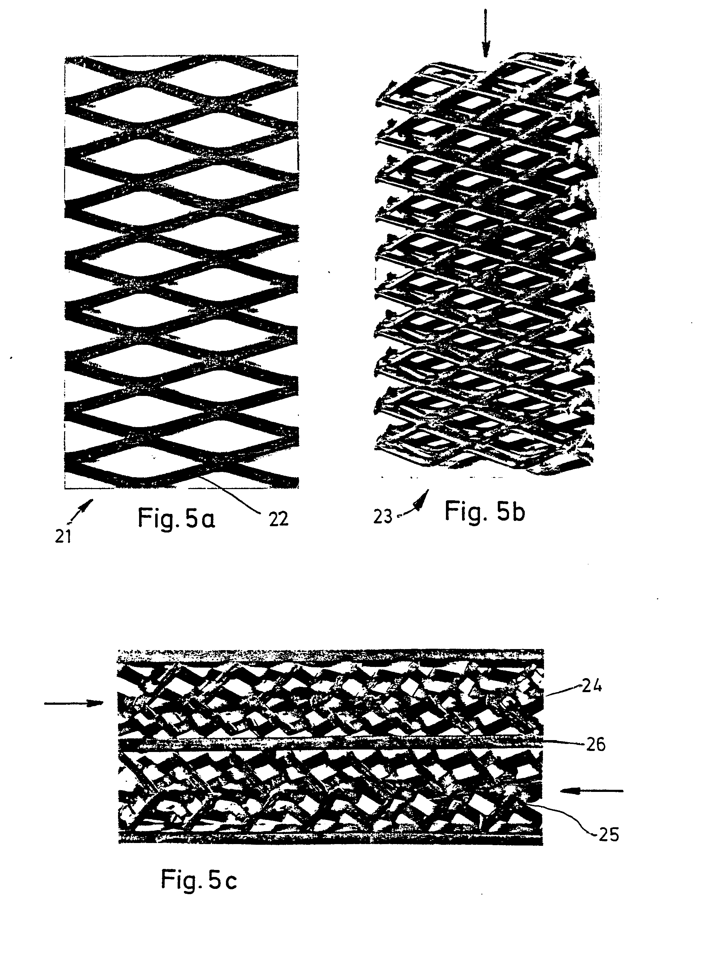

In Fig. 5a ist schematisch ein Streckmetallblech 21 mit seinen Stegen 22 gezeigt. Die Streckmetallplatte 23 der Fig. 5b besteht aus mehreren, aufeinander gelegten und miteinander zweckmäßig durch Schweißen verbundenen Streckmetallblechen, wobei zumindest die äußeren Streckmetallbleche einander symmetrisch so angeordnet sind, daß sie das durchgeleitete Medium nach außen hin abgeben. In Fig. 5c ist eine Anordnung gezeigt, wie sie für den Wärmetauscher nach Fig. 2 und 3 vorgesehen sein können: Rippen 24 sind ebenso wie zwischen ihren Wandungen 26 gebildeten Freiräume von Streckmetallplatten 25 ausgefüllt, so daß sowohl innerhalb als auch zwischen den Rippen große metallene Oberflächen geboten werden, die gewünschten Strömungsbeziehungen erreicht werden und gleichzeitig die Rippenwandungen von beiden Seiten her ausgesteift sind.

Die Wärmetauscher können für unterschiedlichste Zwecke ausgebildet sein. Es ist auch möglich, mehrere Wärmetauscher hintereinander zu verwenden. So können beispielsweise Rauchgase zur Erhitzung eines durch Rippen dargestellten Kessels verwendet werden, die Rauchgase können, weitergeführt, Speisewasser erwärmen, sie können Brauchwasser erhitzen, und schließlich können sie zur Erwärmung der Verbrennungsgase beitragen.

In einem solchen Falle würden die hintereiannder betriebenen Wärmetauscher in Serie vom gleichen Rauchgas durchsetzt, das jeweils zweite Medium jedoch ist in einem Fall
das Kesselwasser, im zweiten Falle Brauchwasser, in einem
anderen Falle aufzuheizendes Speisewasser, und schließlich
wird die Verbrennungsluft vorgewärmt, wobei gleichzeitig
den Rauchgasen die wesentliche noch verbliebene Wärme entzogen wird.

Andererseits ist es aber auch möglich, den Vorwärmer in einem
üblichen Heizkessel vorzusehen, wobei ggf. ebenfalls mehrere,
mindestens zwei, Vorwärmer hintereinander vorgesehen sein
können, beispielsweise um nicht nur das Heizwasser, sondern
ggf. auch Brauchwasser sowie die für die Feuerung benötigte
Verbrennungsluft vorzuwärmen. Durch das hierbei mögliche
tiefe Absenken der Rauchgase wird nicht nur eine weitgehende
Ausnutzung des verwendeten Brennstoffes erzielt, es gelingt
auch, den Rauchgasen Schadstoffe auf einfache Weise und relativ
vollständig zu entziehen.

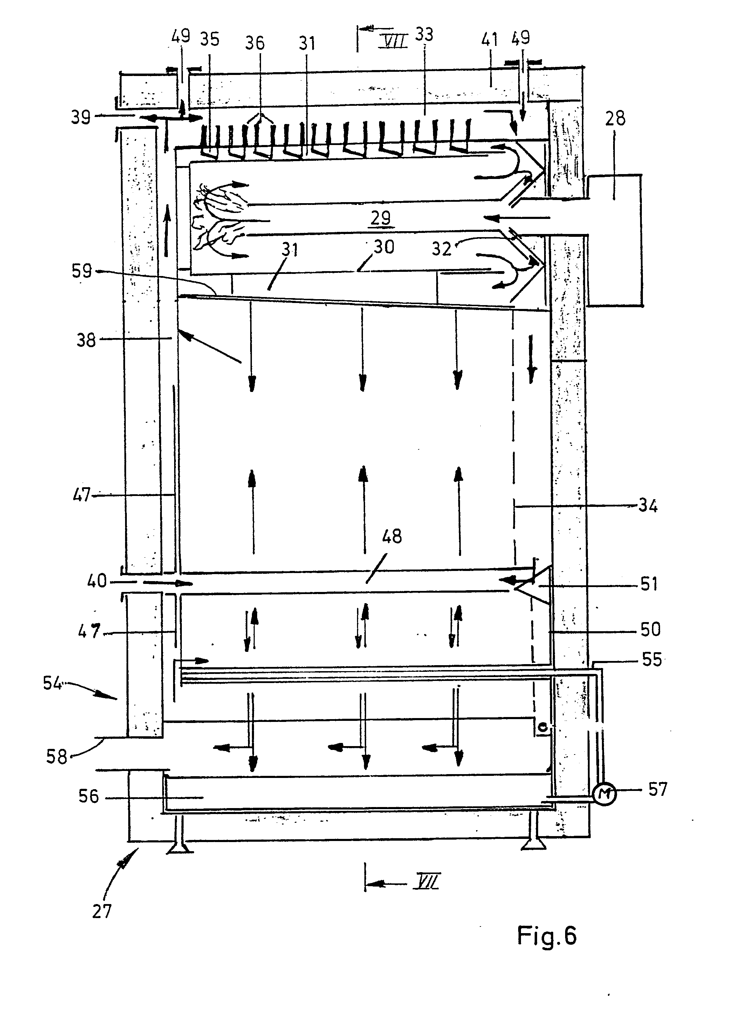

Der in Fig. 6 dargestellte Heizkessel 27 weist einen Brenner
28 auf, dessen Flammrohr 29 in eine Brennkammer 30 hineinragt.
Die vom Brenner 28 bewirkten, Rohöl enthaltenden Luftströme
werden in Richtung des ersten Pfeiles in das Gasflammrohr
29 eingeblasen, in dem sie sich entzünden, und in dem die
wesentliche Verbrennung mit hohen Temperaturen und erhöhtem
Druck stattfindet. Am Ende des Flammrohres werden die Flammgase in Richtung des Doppelpfeiles in die Brennkammer 30
umgelenkt, die im wesentlichen als einseitig geschlossener
Zylinder ausgebildet ist, und umfluten hierbei die Außenwand
des Flammrohres 29, das somit den noch sehr heißen Brenngasen
gegenübersteht und damit im Inneren extrem hohe Temperaturen
zu entwickeln vermag. Am freien Ende der Brennkammer 30
treten die Flammgase entsprechend dem gebogenen Pfeil in die
Heizkammer 31 ein, und nur ein geringer Anteil wird durch
Schlitzdüsen 32 nochmals dem Flammrohr 29 zur Steigerung des

- 8 -

Druckes und zur Vervollständigung der Verbrennung zugeführt.

Die Heizkammer 31 ist in ihrem oberen Teil halbzylinderschalenartig durch einen Wasserbehälter 33 abgedeckt, der sich seitlich nach unten in Richtung auf Rippen 34 hin fortsetzt. Auf die der Heizkammer 31 zugewandte Wandung des Wasserbehälters 33 sind Profile 35 aus hochtemperaturbeständigem Edelstahl aufgeschweißt, welche sowohl deren Wärmestrahlung aufnehmen als auch die den Kontakt mit den Heizgasen vermittelnde Oberfläche vergrößern, sowie die empfangene Wärme direkt in die Wandung des Wasserbehälters 33 ableiten. Im Inneren dieses Wasserbehälters sind, jeweils den Profilen 35 gegenüberliegend, Bolzen 36 oder entsprechende Leitbleche aufgeschweißt, welche den Übergang der von den Profilen 35 aufgenommenen Wärme auf das im Wasserbehälter 33 befindliche Wasser begünstigen. Durch die vergrößerte Oberfläche des Wasserbehälters 33 sowohl zur Heizkammer 31 hin als auch zum eingeschlossenen Wasser erfolgt ein intensiver Wärmeübergang und damit eine intensive Kühlung der Flammgase bereits in der Heizkammer. Unterhalb des Wasserbehälters 33 sind Rippen 34 vorgesehen, die zwischen sich Rauchzüge 37 einschließen, und die in einen hinteren Behälterbereich 38 führen, der nach oben hin mit dem Wasserbehälter 33 in Verbindung steht. Im oberen Bereiche des hinteren Behälterbereiches 38 ist ein Vorlaufanschluß 39 angeordnet, während wesentlich tiefer ein Rücklaufanschluß 40 vorgesehen ist. Umkleidet ist der Heizkessel 27 allseitig mit thermisch isolierten Wandungen 41.

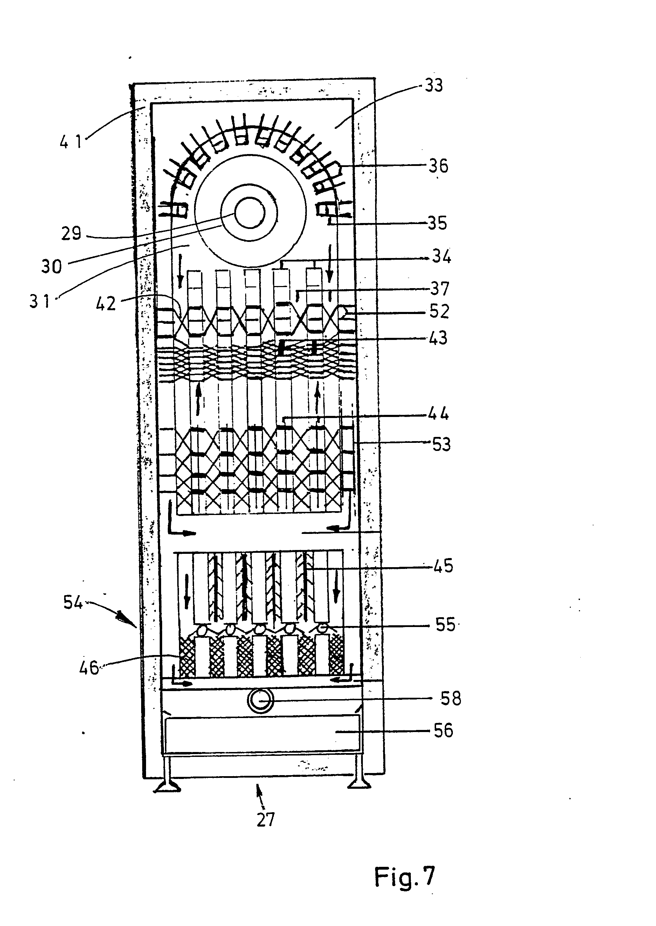

In den Rauchzügen sind zwischen den planparallelen Wandungen der Rippen 34 Streckmetallplatten 42 bis 46 entsprechend der Fig. 7 vorgesehen, die wiederum jeweils aus mehreren aufeinander gelegten und beispielsweise durch Schweißen miteinander verbundenen Streckmetallblechen bestehen. Die Anordnung ist hierbei so gewählt, daß relativ großmaschige Streckmetallplatten 42 in den oberen Bereichen der Rippen 34 angeordnet sind, während tiefer vorgesehene Streckmetallplatten, bspw. die Streckmetallplatten 46, wesentlich feiner gegliedert sind.

- 9 -

Die Streckmetallplatten sind hierbei jeweils so ausgebildet, daß die aus ihrer Ebene ausgebogenen Stege nach unten hin eine Neigungskomponente gegen die jeweils nächstliegende Rippenwandung aufweisen, so daß im Heizkessel 27 von oben nach unten geführte Rauchgase von den Stegen jeweils auf die Rippenwandungen zu geleitet werden.

Innerhalb der Rippen werden für einige Besonderheiten des Durchflusses des Heizungswassers gesorgt. So befinden sich im hinteren Behälterbereich 38 Sperrplatten 47, welche das durch den Rücklaufanschluß 40 eintretende Wasser in ein mit Bohrungen versehenes U-Profil 48 und damit gleichmäßig über die gesamte Breite der Rippen verteilt in diese einleiten. Die Sperrplatte 47 läßt den oberen Bereich der Rippen 34 frei, damit das in diesen aufgeheizte Wasser über den Wasserbehälter 33 bis zum Vorlaufanschluß 39 zu strömen vermag. Dieses Wasser kann auch über die Anschlüsse 49 einen aufgesetzten, in der Figur nicht dargestellten Boiler erreichen. Im übrigen läuft das kältere Wasser aus dem oberen Bereich der vorderen Seitenwandungen entlang des Leitbleches 50 zu einer als Dreikantrohr ausgebildeten Querverbindung 51. Diese ist mit den Rippen 34 wasserdicht verbunden, beispielsweise verschweißt, und leitet das Wasser wieder in die Aufheizzonen. Gleichzeitig wird hierdurch eine mechanische Stabilisierung der Konstruktion erreicht.

Im Betriebe strömen die Flammgase aus dem Flammrohr 29 in die Brennkammer 30 und gelangen von dieser aus in die Heizkammer 31. Ein großer Teil der Wärme wird durch die auf den Wasserbehälter 33 aufgesetzten Profile 35 sowie die auf diese aufgesetzten Bolzen 36 an den Inhalt des Wasserbehälters 33 weitergegeben. Die Rauchgase ziehen dann von der Brennkammer 30 über die Rauchzüge 37 zwischen den Rippen 34 nach unten ab. Hierbei geben sie die ihnen noch verbliebene Wärme zum Teil, intensiviert durch die durch die Streckmetallplatten 42 bis 46 bewirkten Strömungen, direkt an die Wandungen der Rippen 34 und damit an das in den Rippen fließende Wasser ab, zum Teil übermitteln sie ihre Wärme aber auch den Streckmetallplatten selbst , die durch Strahlung und Kontakt der Flanken ihre äußeren Stege mit den Wandungen der Rippen auf diese zusätzlich die von ihnen übernommene Wärme übertragen. Hierbei hat es sich bewährt, wie schon erwähnt, von oben nach unten Streckmetalle mit feineren Strukturen und damit größerer Oberfläche zu verwenden, zumal entsprechend der weitergehenden Abkühlung auch das Volumen der Rauchgase ebenso abnimmt wie der noch verbleibende, für den Wärmeübergang nutzbar zu machende Temperaturunterschied. Auch hier kann der Wärmeübergang von den Wandungen der Rippen 34 zum von ihnen umschlossenen Wasser weiterhin intensiviert werden: Die Rippen können jeweils mit Bolzen 52 ausgestattet sein, die einander gegenüberliegende Wandungen der Rippen miteinander verbinden und damit sowohl zur Wärmeübertragung auf das Wasser als auch zur mechanischen Stabilisierung der Rippen selbst beitragen. Diese Bolzen können beispielsweise jeweils durch Punktschweißungen mit den Wandungen der Rippen 34 verbunden sein. Anderseits besteht die Möglichkeit, sie in spezielle Lochbleche einzudrücken und diese in die Rippen einzulegen. Auch hierbei können die Bolzen 52 mit den Lochblechen 53 und diese Lochbleche mit den Wandungen der Rippen 34 zusätzlich durch Schweißungen verbunden sein. Es besteht aber auch die Möglichkeit, selbst im Inneren der Rippen Streckmetallplatten oder deren Abschnitte vorzusehen und sie gegebenenfalls mit den Wandungen zu verschweißen. Die Rippen können hierbei kastenartig ausgebildet sein oder durch vorgefertigte Halbschalen gebildet werden, die durch Guß oder Pressen von Blech hergestellt sind.

Unterhalb des Rücklaufanschlusses 40 befindet sich die Niedrigtemperatur- oder auch Naßzone des Heizkessels 27, hier als Entschwefelungszone 54 bezeichnet. In dieser Entschwefelungszone werden sowohl die Rippen 34 als auch die Streckmetallplatten 46 ebenso vorgesehen wie in den höheren Zonen, allerdings weisen die Streckmetallplatten 45 und 46 der Fig. 7 eine noch weiterhin gesteigerte Feinstruktur auf. Zwischen diesen Streckmetallplatten ist eine Zone freigehalten worden, und im Ausführungsbeispiel sind die Rippen 34 hier durch Sprührohre 55 unterbrochen, die mit seitlichen Sprühöffnungen ausgestattet sind. Die abgesprühte Flüssigkeit sowie das bei der fortschreitenden Abkühlung durch Kondensation aus den Rauchgasen ausgefällte Wasser wäscht aus diesen Rauchgasen das Schwefeldioxyd, ggf. auch Stickoxyde, aus und bildet schweflige bzw. salpetrige Säure. Die abfließende Flüssigkeit gelangt in einen die Rippen 34 und die Rauchzüge 37 unterfangenden Auffangbehälter 56, in dem durch Zumischung von entsprechend der Brenndauer, ggf. auch der Brenntemperatur dosierter Natronlauge die Waschflüssigkeit neutralisiert wird, und aus dem sie mittels der Umwälzpumpe 57 wieder zur Speisung der Sprührohre 55 entnommen wird. Selbst die hierbei noch entstehende Neutralisationswärme kann von den unteren Bereichen der Rippen 34 aufgenommen werden, insbesondere wenn hier gesonderte Rippen vorgesehen sind, die mit der Außenluft verbunden sind, und aus denen der Brenner 28 die von ihm abgegebene Luft absaugt. Ebenso kann Verdampfungswärme zurückgewonnen werden.

Nach weitestgehender Abgabe der in ihnen enthaltenen Wärmeenergie verlassen die Rauchgase den Heizkessel 27 über einen Abzug 58. Bei den erreichten niedrigen Abgastemperaturen hat es sich als zweckmäßig erwiesen, den Abzug selbst bzw. die Kaminzüge aus Kunststoffrohren zu erstellen oder mit ihnen auszukleiden, so daß über den Abzug mitgerissene Feuchtigkeit wieder zurückfließen und in den Auffangbehälter abzurinnen vermag. Insbesondere bei einer solchen Auskleidung mit Kunststoffrohren ist es auch möglich, in diesen noch einen zusätzlichen, von der Umwälzpumpe 57 mitgespeisten Sprühkopf einzusetzen, der die vollständige Neutralisierung der Rauchgase zu fördern vermag.

Zur Fernhaltung der Sprühflüssigkeit von der Kesselisolierung hat es sich bewährt, diese durch ein über die Kesselbreite reichendes Spritzblech abzudecken.

Zur Reinigung der Kesselräume, insbesondere der Rauchzüge und der in ihnen vorgesehenen Streckmetallplatten,ist die Vorderfront des Heizkessels 27, zweckmäßig in voller Breite und Höhe,

- 12 -

durch Abschwenken oder Abnehmen der Frontplatte zu öffnen. Hierbei liegen sowohl die Brennkammer als auch die Rauchzüge 37 frei, die Streckmetallplatten 42 bis 46 können den Rauchzügen entnommen werden; auch die Wandungen der Rippen 34 sind zur Inspektion sowie zur Reinigung freigegeben.

Bewährt hat es sich, Streckmetallplatten oder Zonen derselben mit einer katalytisch wirksamen Schicht zu versehen. So können bspw. Oberflächenzonen von Streckmetallplatten mit einer dünnen Platinschicht versehen sein, die in der Lage ist, in den Rauchgasen weitere chemische Reaktionen auszulösen. Zur Beseitigung von als Schadstoff empfundenen Komponenten der Rauchgase können hierzu noch gesonderte zusätzliche Stoffe, bspw. über Sprührohre, eingeleitet werden. So besteht die Möglichkeit, in Feuerungsanlagen entstehende Stickoxyde durch zusätzlich eingeleitetes Ammoniakgas zu neutralisieren, das in der Lage ist, unter Einwirkung von Katalysatoren Stickoxyde in Stickstoff und Wasser zu wandeln.

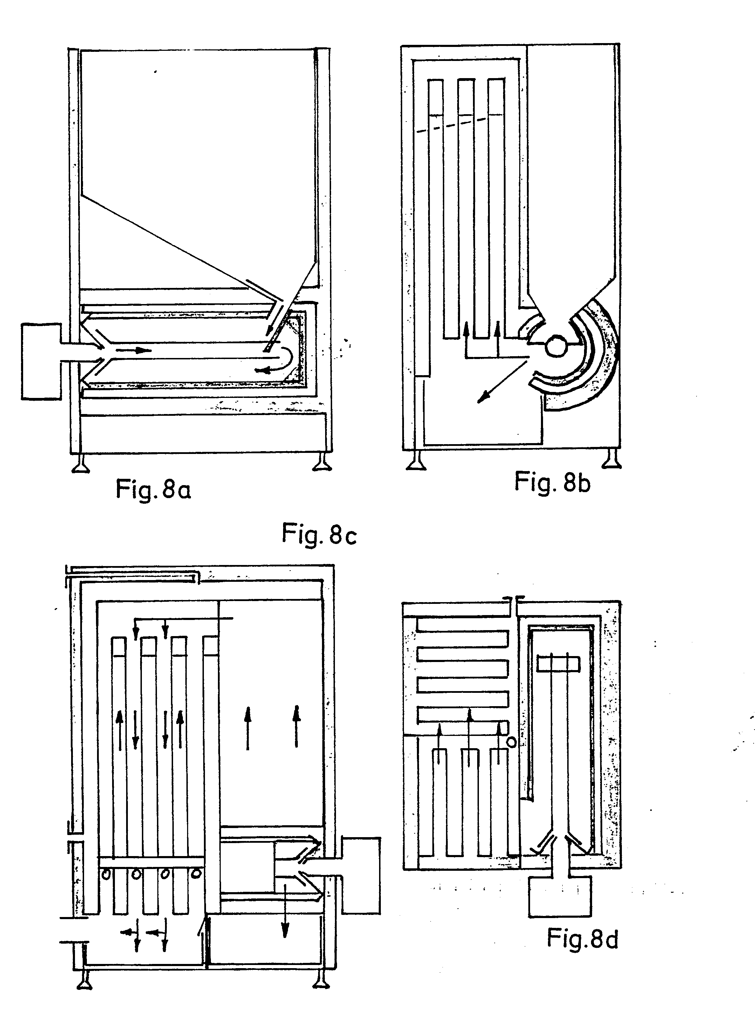

Die Erfindung ist im Falle der Anwendung auf Heizkessel nicht auf Öl als Brennstoff beschränkt. Nach den Fign. 8, die unterschiedliche Schnitte durch einen Heizkessel zeigen, können auch feste Brennstoffe, wie Koks oder insbes. Kohlenstaub, verfeuert werden. So zeigt Fig. 8a einen mit einem rampenartig abgeschrägten Boden versehenen Brennstoffbehälter, dessen Ausgangsöffnung durch eine verschiebbare, durch einen Strich angedeutete Klappe dosierbar Kohlenstaub in eine mit einer Luftzuführung ausgestattete, unter dem Behälter vorgesehene Brennkammer führt. Die entstehenden Flamm- und Rauchgase können nach Fig. 8b zunächst aufsteigend zwischen Rippen vorgesehene Streckmetallplatten passieren und dann einem zweiten Satz von zwischen Rippen angeordneten Streckmetallplatten zugeführt werden, den sie in umgekehrter Richtung passieren. Auch hier lassen sich Schadstoffe, bspw. Schwefeldioxyd, entsprechend den zu Fig. 5 gemachten Angaben entziehen bzw. wandeln. Als wesentlich hat es sich bspw. für die Entziehung von Schwefeldioxyd gezeigt,

- 13 -

die Ausgangstemperatur der Rauchgase weitmöglichst, d.h.
nach Möglichkeit noch erheblich unter 100° C, abzusenken,
um Verdunstungen der Sprühflüssigkeit vorzubeugen, deren
Absorptionsmöglichkeit weitgehend auszunutzen und nach Möglichkeit auch Verdampfungswärme rückzugewinnen. Gegebenenfalls
kann zur Erreichung entsprechend niedriger Temperaturen
hierzu ein weiteres die Rippen passierendes Medium benutzt
werden.

- 14 -

<u>Patentansprüche</u>

1. Wärmetauscher zur Übertragung von Wärmeenergie insbesondere zwischen einem flüssigen und einem gasförmigen Medium mit einer Anzahl von vom flüssigen Medium vorzugsweise parallel durchflossenen, vom gasförmigen Medium durchsetzte Zwischenräume aufweisenden Rippen, d a d u r c h   g e k e n n z e i c h n e t , daß die Rippen einander parallele Wandungen aufweisen, und daß zwischen den Wandungen in festem Kontakte mit diesen stehende Streckmetallplatten vorgesehen sind, wobei die Stege des Streckmetalles in Strömungsrichtung des gasförmigen Mediums gegen die Wandungen der Rippen gerichtet sind.

2. Wärmetauscher nach Anspruch 1, d a d u r c h   g e k e n n z e i c h n e t , daß die Streckmetallplatten jeweils aus mehreren, zweckmäßig in gerader Anzahl, aufeinandergelegten und miteinander verschweißten Streckmetallblechen bestehen.

3. Wärmetauscher nach Anspruch 2, d a d u r c h   g e k e n n z e i c h n e t , daß die Streckmetallbleche bezüglich der Ausrichtung ihrer Stege symmetrisch angeordnet sind.

4. Wärmetauscher nach einem der Ansprüche 1 bis 3, d a d u r c h   g e k e n n z e i c h n e t , daß in Strömungsrichtung hintereinander Streckmetallplatten mit unterschiedlichen, stufenweise abnehmenden Maschenweiten vorgesehen sind.

- 15 -

5. Wärmetauscher nach einem der Ansprüche 1 bis 4,
d a d u r c h   g e k e n n z e i c h n e t ,
daß zumindest in in Strömungsrichtung angeordneten
ersten Zonen der Zwischenräume die Streckmetallplatten
aus hochtemperaturbeständigen Metallen bzw. Metallegierungen bestehen.

6. Wärmetauscher nach einem der Ansprüche 1 bis 5,
d a d u r c h   g e k e n n z e i c h n e t ,
daß anstelle von Streckmetallblechen oder gegebenenfalls
zusätzlich zu diesen gelappte Bleche mit vorzugsweise
dreiseitig ausgestanzten, schräg ausgebogenen Lappen
vorgesehen sind.

7. Wärmetauscher nach einem der Ansprüche 1 bis 6,
d a d u r c h   g e k e n n z e i c h n e t ,
daß die Rippen aus miteinander verschweißten Halbschalen gebildet sind.

8. Wärmetauscher nach Anspruch 7,
g e k e n n z e i c h n e t   d u r c h
aus Blech gepreßte Halbschalen.

9. Wärmetauscher nach Anspruch 7,
g e k e n n z e i c h n e t   d u r c h
gegossene Halbschalen.

10. Wärmetauscher nach einem der Ansprüche 1 bis 9,
d a d u r c h   g e k e n n z e i c h n e t ,
daß Rippen durch diese durchziehende Distanzbolzen
ausgesteift sind.

11. Wärmetauscher nach Anspruch 10,
d a d u r c h   g e k e n n z e i c h n e t ,
daß die Enden der Distanzbolzen in Löcher von Lochblechen eingepreßt sind und diese Verbindung und/oder die Lochbleche mit den Wandungen der sie aufnehmenden Rippen verschweißt sind.

12. Wärmetauscher nach einem der Ansprüche 1 bis 11, d a d u r c h   g e k e n n z e i c h n e t , daß Innenwandungen von Rippen bzw. deren Halbschalen mit rippenartigen Leisten, mit Bolzen oder dergleichen ausgestattet sind.

13. Wärmetauscher nach einem der Ansprüche 1 bis 12, d a d u r c h   g e k e n n z e i c h n e t , daß die Wandungen und/oder der Innenraum von Rippen durch gegebenenfalls mehrlagige Streckmetallplatten und/oder gelappte Bleche ausgesteift ist.

14. Wärmetauscher nach einem der Ansprüche 1 bis 13, d a d u r c h   g e k e n n z e i c h n e t , daß die auf Schmalseiten der Rippen weisende Frontseite des ihn aufnehmenden Gehäuses abnehmbar und/oder zum Öffnen ausgebildet ist und, geschlossen, durch Keramikfasern isoliert ist, welche die thermische Dehnung der Rippen und/oder der Streckmetallplatten aufzunehmen vermögen.

15. Wärmetauscher nach einem der Ansprüche 1 bis 14, d a d u r c h   g e k e n n z e i c h n e t , daß die Rippen gegen die Streckmetallplatten bzw. gegeneinander verspannbar sind.

16. Wärmetauscher nach einem der Ansprüche 1 bis 15, d a d u r c h   g e k e n n z e i c h n e t , daß die Rippen mit das ihnen zugeführte Medium über deren Breite verteilenden Einbauten ausgestattet sind.

17. Von Rauchgasen einer Feuerung durchströmte Wärmetauscher nach einem der Ansprüche 1 bis 16, d a d u r c h   g e k e n n z e i c h n e t , daß in einer Zone des Wärmetauschers mit fortgeschrittener, unter 100° geführten Kühlung der Rauchgase zwischen den Rippen sich über deren volle Breite erstreckende, von einer Umwälzpumpe gespeiste Sprührohre einer Entschwefelungsvorrichtung vorgesehen sind.

18. Wärmetauscher nach Anspruch 17, d a d u r c h   g e k e n n z e i c h n e t , daß in Strömungsrichtung hinter einer vom Streckmetall freibleibenden, die Sprührohre aufweisenden Zone der zwischen Rippen gebildeten Zwischenräume engmaschine Streckmetallplatten vorgesehen sind.

19. Wärmetauscher nach Anspruch 17 oder 18, d a d u r c h   g e k e n n z e i c h n e t , daß die Rippen von einem Auffangbehälter untergriffen sind und die Ansaugleitung der Umwälzpumpe in diesen Auffangbehälter reicht.

20. Wärmetauscher nach einem der Ansprüche 17 bis 20, d a d u r c h   g e k e n n z e i c h n e t , daß die thermische Isolierung im Bereiche der die Sprührohre aufweisenden Entschwefelungszone durch ein Spritzblech abgedeckt ist.

21. Wärmetauscher nach einem der Ansprüche 17 bis 20, d a d u r c h   g e k e n n z e i c h n e t , daß im ihm nachgeordneten Abzugstutzen für Rauchgase ein von der Umwälzpumpe gespeister Sprühkopf angeordnet ist.

22. Wärmetauscher nach einem der Ansprüche 17 bis 21,
d a d u r c h   g e k e n n z e i c h n e t ,
daß die Umwälzpumpe parallel zu einem als Feuerung
vorgesehenen Brenner betrieben wird, und daß dem Auffangbehälter und/oder der Saugleitung der Umwälzpumpe
ein Geber zugeordnet ist, der bei Erreichen eines minimalen Füllstandes oder Ansaugdruckes ein Magnetventil
betätigt, das zwischen einem Vorratsbehälter für Natronlauge und dem Auffangbehälter bzw. dem Ansaugstutzen der
Umwälzpumpe angeordnet ist.

23. Wärmetauscher nach einem der Ansprüche 1 bis 22,
d a d u r c h   g e k e n n z e i c h n e t ,
daß er einem Wasserbehälter nachgeordnet ist, welcher
die Brennkammer eines Heizkessels mindestens bereichsweise umschließt.

24. Wärmetauscher nach Anspruch 23,
d a d u r c h   g e k e n n z e i c h n e t ,
daß der Wasserbehälter einen sich entlang der Rückwand
des Heizkessels erstreckenden Behälterbereich aufweist,
von dem aus die Rippen sich kammartig zur Frontseite
des Heizkessels erstrecken, und daß die von hochtemperaturbeständigen Metallstreifen gebildeten oder abgedeckten Oberseiten der Rippen in Richtung auf den Behälterbereich ansteigen.

25. Wärmetauscher nach Anspruch 23 oder 24,
d a d u r c h   g e k e n n z e i c h n e t ,
daß die Rippen in ihrem oberen Bereiche mit dem Wasserbehälter verbunden sind.

26. Wärmetauscher nach einem der Ansprüche 23 bis 25,
d a d u r c h   g e k e n n z e i c h n e t ,

0164098

- 19 -

daß die Brennkammer umschließende Wandungen des Wasserbehälters mit sich in den Profilraum erstrekkenden Profilstäben verbunden sind, und daß vorzugsweise die Profile tragenden Wandungsbereiche des Wasserbehälters auch an ihrer Innenseite Profile, Bolzen oder dergleichen aufweisen.

27. Wärmetauscher nach einem der Ansprüche 23 bis 26, d a d u r c h   g e k e n n z e i c h n e t , daß der Rücklaufanschluß des Heizkessels und zwischen den Rippen vorgesehene Querverbindungen in gleicher Höhe angeordnet sind, und daß im rückwärtigen Bereiche des Wasserbehälters eine Sperrplatte vorgesehen ist, der gegenüber in die Rippen führende aufgebohrte U-Profile vorgesehen sind.

28. Wärmetauscher nach einem der Ansprüche 1 bis 27, d a d u r c h   g e k e n n z e i c h n e t, daß Streckmetallplatten oder Bereiche derselben mit einer katalytisch aktiven Beschichtung, bspw. einem Platin-Überzug, versehen sind.

29. Wärmetauscher nach Anspruch 28, d a d u r c h   g e k e n n z e i c h n e t, daß katalytisch wirksamen Zonen von Streckmetallplatten Zuleitungen für Schadstoffe wandelnde Stoffe vorgeordnet sind.

Fig. 1

Fig. 2

Fig. 3

Fig. 4

Fig. 5a

Fig. 5b

Fig. 5c

Fig.6

Fig. 7

Fig. 8a

Fig. 8b

Fig. 8c

Fig. 8d

0164098